# EUROPÄISCHE PATENTSCHRIFT

(11) **EP 1 019 422 B1**
(45) Veröffentlichungstag und Bekanntmachung des Hinweises auf die Patenterteilung: **02.05.2002**
(21) Anmeldenummer: 98951439.3
(22) Anmeldetag: 19.09.1998
(51) Int. Cl.: C07F 17/02

(54) **PHOSPHANSUBSTITUIERTE COBALTICINIUMSALZE, HERSTELLUNG UND VERWENDUNG ALS KATALYSATORBESTANDTEIL**
PHOSPHINE-SUBSTITUTED COBALTICINIUM SALTS, PRODUCTION THEREOF, AND USE OF THE SAME AS CONSTITUENTS OF CATALYSTS
SELS DE COBALTICINIUM SUBSTITUES PAR PHOSPHANE, LEUR PREPARATION ET LEUR UTILISATION COMME CONSTITUANT DE CATALYSEUR

(30) Priorität: 29.09.1997 DE 19742904
(43) Veröffentlichungstag der Anmeldung: 19.07.2000
(73) Patentinhaber: Celanese Chemicals Europe GmbH, 60439 Frankfurt am Main (DE)
(72) Erfinder: SALZER, Albrecht, D-52074 Aachen (DE); BRASSE, Claudia, D-52074 Aachen (DE)
(86) Internationale Anmeldenummer: EP9805989
(87) Internationale Veröffentlichungsnummer: WO9916776

(56) Entgegenhaltungen:
- RUDIE, ALAN W. ET AL: "Comparative study of 1,1'-bis(diphenylphosphino)cobaltocinium hexafluorophosphate and 1,1'-bis(diphenylphosphino)ferrocene as bidentate ligands" INORG. CHEM. (1978), 17(10), 2859-63 CODEN: INOCAJ;ISSN: 0020-1669,1978, XP002089110 in der Anmeldung erwähnt

## Beschreibung

Die Erfindung betrifft phosphansubstituierte Cobalticiniumsalze, ein Verfahren zu ihrer Herstellung sowie die Verwendung als Katalysatorbestandteil.

Cyclopentadienylverbindungen spielen in der metallorganischen Chemie eine außerordentlich wichtige Rolle. Der bekannteste Vertreter dieser Verbindungsklasse, die man auch zu den Metallocenen rechnet, ist das Ferrocen. Ferrocen zeichnet sich durch seine chemische Stabilität aus und ermöglicht durch Substitutionsreaktionen am Cyclopentadienylring eine weitreichende Derivatisierung. Eine solche Substitutionsreaktion ist z.B. die Acylierung mit Acetylchlorid in Gegenwart von Aluminiumchlorid. Eine andere Substitutionsreaktion am Cyclopentadienylring mit Phosphanen führt zu sogenannten Ferrocenylphosphanen, die sich als geeignete Liganden für einphasige katalytische Umsetzungen erwiesen haben, wie z.B. bei K.-S. Gan, T.S.A. Hor in "Ferrocenes", Verlag Chemie Weinheim, 1995, Seiten 47 - 104 oder von T. Hayashi, Pure & Appl. Chem., 1988, 60, Seite 7 bis 12 beschrieben. 1,1'Bis-(diphenylphosphino)ferrocen läßt sich in Gegenwart von N,N,N',N'-Tetramethylethylendiamin durch Umsetzung von Ferrocen mit n-Butyllithium und anschließender Reaktion mit Diphenylchlorphosphan in Hexan als Lösungsmittel herstellen (J. Organomet. Chem. 27, 241, 1971). In gleicher Weise ist die entsprechende Arsenverbindung erhältlich.

1,1'-Bis(diphenylphosphino)ferrocen läßt sich als zweizähniger Chelatligand in Rhodiumkomplexen verwenden, die als Katalysator für Hydroformylierungsreaktionen eingesetzt werden. So offenbart US 4,169,861 ein in Toluol einphasig durchgeführtes Verfahren zur Herstellung von Aldehyden durch Reaktion von α-Olefinen, vorzugsweise von 1-Hexen, mit Kohlenmonoxid und Wasserstoff bei Temperaturen zwischen 25 °C und 150 °C und bei einem Druck von 15 bis 3000 psi (dies entspricht 0,1 bis 20 MPa), bevorzugt bei einem Druck von 50 - 500 psi (dies entspricht 0,34 bis 3,4 MPa) in Gegenwart eines Rhodiumkatalysators, der, bezogen auf ein Grammatom Rhodium, ein Mol 1,1'-Bis(diphenylphosphino)ferrocen enthält. Neben den Phenylgruppen können an den Phosphoratomen auch Alkylgruppen, weitere Arylgruppen, alkoxy-substituierte Arylgruppen und Fluor-substituierte Arylgruppen mit bis zu zwanzig Kohlenstoffatomen gebunden sein. Darüber hinaus wird ein 5 bis 100 facher molarer Überschuß eines einzähnigen Liganden verwendet, bei dem es sich um ein tertiäres Amin, Phosphin oder Arsin, vorzugsweise Phosphin, handelt. Dieser einzähnige Ligand trägt aliphatische, alicyclische oder aromatische Gruppen mit 1 bis 20 Kohlenstoffatomen.

Eine weitere Dicyclopentadienylverbindung ist das Cobaltocen, bei dem es sich um eine dunkelviolette, luftempfindliche paramagnetische Substanz handelt. Vom Cobaltocen läßt sich durch Oxidation das diamagnetische Cobalticinium-Kation ableiten, das mit einer Reihe von Anionen, z.B. mit Tetraphenylborat oder Pikrat Salze bildet, die sowohl oxidations- als auch reduktionsunempfindlich sind und in Wasser eine ausgezeichnete Stabilität zeigen. Das Cobalticinium-Kation und das Ferrocen sind isoelektronisch, d.h. es liegt die gleiche Zahl und Anordnung der Elektronen vor.

Auch vom Cobaltocen und vom Cobalticinium-Kation sind phosphansubstituierte Derivate bekannt. Gemäß Organometallics 1986, 5, Seiten 1405-1411 läßt sich 1,1'-Bis(diphenylphosphino)cobaltocen durch Reaktion von Thallium Cyclopentadienyldiphenylphosphin mit wasserfreiem Cobaltchlorid herstellen. 1,1'-Bis(diphenylphosphino)-cobaltocen läßt sich durch Einleiten von Sauerstoff, Zugabe von Essigsäure und anschließender Zugabe von Ammoniumhexafluorophosphat in 1,1'-Bis(diphenylphosphino)cobalticinium Hexafluorophosphat überführen, das folgende Strukturformel aufweist:

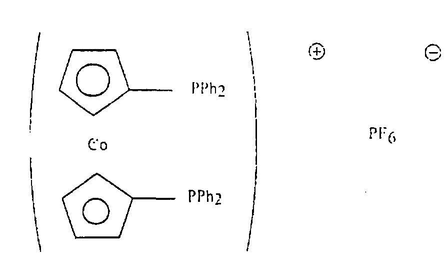

Im einschlägigen Stand der Technik wird das 1,1'-Bis(diphenylphosphino)cobalticinium-Kation mit (dppc)⁺ oder mit (cdpp)⁺ abgekürzt. Aus Inorganic Chemistry, Vol. 17, No. 10, 1978, Seiten 2859 bis 2863 ist ein anderes Verfahren zur Herstellung von 1,1'-Bis(diphenylphosphino)cobalticinium Hexafluorophosphat bekannt. Hiernach wird zunächst unter Kühlung(Dimethoxyethan)Natrium Cyclopentadienid zu Chlordiphenylphosphan gegeben. Anschließend wird unter Kühlung zunächst n-Butyllithium in Hexan zugegeben und anschließend wasserfreies Colbaltchlorid hinzugefügt. Die nachfolgende Oxidation des 1,1'-Bis(diphenylphosphino)cobaltocen erfolgt unter Einleiten von Sauerstoffgas bei Raumtemperatur in Gegenwart von Essigsäure. Die Zugabe einer wäßrigen Lösung von Ammoniumhexafluorophosphat ergibt 1,1'-Bis (diphenylphosphino)cobalticinium Hexafluorophosphat.

Organometallics 1986, 5,1405-1411 und Inorganic Chemistry, Vol. 17, No. 10, 1978, Seiten 2859 bis 2863 offenbaren die Verwendung von 1,1'-Bis(diphenylphosphino)cobaltocen bzw. des 1,1'-Bis(diphenylphosphino)-cobalticinium-Kations als ein- bzw. zweizähnigen Liganden gegenüber Metallcarbonylen der Gruppe VIA des Periodensystems der Elemente.

Die Verwendung des ungeladenen 1,1'-Bis(diphenylphosphino)cobaltocen und des einfach geladenen 1,1'-Bis(diphenylphosphino)cobalticinium-Kations als Ligand in Metallkomplexen, die katalytische Eigenschaften besitzen, ist bei J. Am. Chem. Soc. 1995, 117, 3617-3618 offenbart. So läßt sich analog der Herstellung von Bis-(dimethylphenylphosphan) Rhodium (NBD) Perchlorat (NBD = Norbornadien, Bicyclo[2,2,1]hepta-2,5-dien) unter Verwendung von 1,1'-Bis(diphenylphosphino)-cobalticinium Hexafluorophosphat der zweikernige zweifach geladene Komplex [dppc Rh(NBD)] (PF₆)₂ sowie unter Verwendung von 1,1'-Bis(diphenylphosphino)cobaltocen der einfach geladene zweikernige Komplex [dppc Rh (NBD)] PF₆ erhalten. Aus diesen Komplexen läßt sich durch Zugabe von Aceton, das gleichzeitig als Lösungsmittel verwendet wird, NBD gegen Aceton austauschen. Die so erhaltenen Zweikernkomplexe [dppc Rh (Aceton)ₙ]⁻ und [dppc Rh (Aceton)ₙ]⁺⁺, bei denen der Stand der Technik nur eine unbestimmte Zahl an koordinierten Acetonmolekülen offenbart, zeigen katalytische Eigenschaften, wobei der einfach geladene Komplex [dppc Rh(Aceton)ₙ]⁺ PF₆ für die Hydrierung, der zweifach geladenen Komplex [dppc Rh (Aceton)ₙ]⁺⁺ (PF₆)₂ für die Hydrosilylierung geeignet ist. Sowohl die Hydrierungs-als auch die Hydrosilylierungsreaktionen werden einphasig in einem organischen Lösungsmittel, z.B. Aceton, das auch gleichzeitig als Reaktionspartner wirkt, durchgeführt.

Vor dem Hintergrund, daß technisch bedeutende Prozesse, wie Hydroformylierungen oder Hydrierungen in Gegenwart von katalytisch wirksamen Metallkomplexen durchgeführt werden, bestand daher die Aufgabe, weitere phosphansubstituierte Cobalticiniumsalze bereitzustellen, um das Spektrum der verfügbaren katalytisch wirksamen Metallkomplexe zu erweitern.

Diese Aufgabe wird gelöst durch ein Verfahren zur Bereitstellung von Verbindungen der allgemeinen Formel I 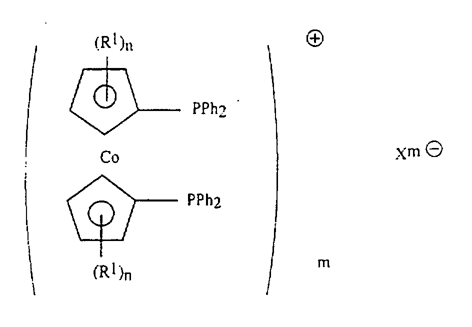 wobei

R¹ gleich oder verschieden ist und Wasserstoff, Alkyloder Alkoxyreste mit 1 bis 14 Kohlenstoffatomen, ferner Cycloalkyl-, Aryl- oder Aroxyreste mit 6 bis 14 Kohlenstoffatomen, einen anellierten Benzolring, einen Säureamidrest -C(O)-NR²R³, in dem R² und R³ gleich oder verschieden sind und für Wasserstoff, Alkylreste mit 1 bis 14 Kohlenstoffatomen, Cycloalkyl- oder Arylreste mit 6 bis 14 Kohlenstoffatomen stehen, die Carboxylgruppe oder einen Esterrest -C(O)-OR⁴, in dem R⁴ für einen Alkylrest mit 1 bis 14 Kohlenstoffatomen, ferner für einen Cycloalkyl- oder Arylrest mit 6 bis 14 Kohlenstoffatomen steht, bedeutet, n gleich oder verschieden ist und eine ganze Zahl von 0 bis 4 ist, m eine ganze Zahl von 1 bis 3 ist und X gleich Hexafluoroantimonat, Tetraphenylborat, Tosylat, Tetrafluoroborat, Triflat, Trifluoracetat, Triiodid, Tribromid, Nitrat, Perchlorat, Sulfat, Phosphat, Sulfonat ⁻O-S(O)₂-R⁵, wobei R⁵ einen Alkylrest mit 1 bis 14 Kohlenstoffatomen, Cycloalkyl- oder Arylrest mit 6 bis 14 Kohlenstoffatomen bedeutet, oder Carboxylat ⁻O-C(O)-R⁶, wobei R⁶ für Wasserstoff, einen Alkylrest mit 1 bis 14 Kohlenstoffatomen, ferner für einen Cycloalkyl- oder Arylrest mit 6 bis 14 Kohlenstoffatomen steht, ist, durch Oxidation der Verbindungen der allgemeinen Formel II 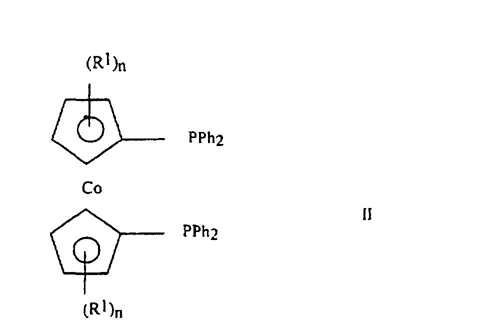 wobei R¹ und n die zuvor genannte Bedeutung besitzt, dadurch gekennzeichnet, daß die Oxidation bei einer Temperatur von -5°C bis 40°C, vorzugsweise von 10°C bis 30°C, in Gegenwart einer organischen Säure oder eines Säurederivates mit 1 bis 20 Kohlenstoffatomen erfolgt und danach die Umsetzung mit einer das Anion X enthaltenden Lösung durch Zugabe einer das Anion X enthaltenden Lösung bei einer Temperatur von 0°C bis 40°C, vorzugsweise von 15 bis 25°C erfolgt. Bevorzugt werden nach dieser Ausführung Verbindungen der allgemeinen Formel I mit X gleich Hexafluoroantimonat, Tetraphenylborat, Tosylat, Sulfat oder Nitrat erhalten.

Bevorzugt hergestellte phosphansubstituierte Cobalticinium-Salze der allgemeinen Formel I sind solche, in denen R¹ gleich oder verschieden ist und für Wasserstoff, für einen Methyl-, Isopropyl-, Isobutyl-, t-Butyl-, Phenyloder Naphthylrest oder einen anellierten Benzolring (so daß sich eine Indenylstruktur ausbildet) steht, n gleich 0 oder 1 ist, m gleich 1 oder 2 ist und X für Tetrafluoroborat, Nitrat oder Sulfat steht.

In einer weiteren Ausführung des erfindungsgemäßen Verfahrens erfolgt die Oxidation der Verbindungen der allgemeinen Formel II in Gegenwart einer organischen Säure oder eines Säurederivates und in Gegenwart des Anions X bei einer Temperatur von -5°C bis 40°C, vorzugsweise von 0°C bis 25°C. Bei dieser Arbeitsweise werden vorzugsweise Verbindungen der allgemeinen Formel I mit X gleich Nitrat, Sulfat oder Tetrafluoroborat erhalten.

Es wurde überraschenderweise gefunden, daß die Oxidation der Verbindungen der allgemeinen Formel II schon in Gegenwart einer organischen Säure oder eines Säurederivats erfolgt und daß auf das aktive Einleiten von Sauerstoff oder einem sauerstoffhaltigen Gas verzichtet werden kann. Dadurch lassen sich unerwünschte Nebenreaktionen, wie z.B. die Oxidation des Phosphors(III) in das Phosphanoxid in den Hintergrund drängen. Dabei liegt zunächst das phosphansubstituierte Cobalticinium-Kation mit dem Anion aus der organischen Säure oder aus dem Säurederivat vor. In Gegenwart des Anions X oder nach Zusatz einer das Anion X enthaltenden Lösung wird dann das Anion, das aus der organischen Säure oder aus dem Säurederivat stammt, verdrängt und es bilden sich die Verbindungen der allgemeinen Formel I.

Bei den zugesetzten Säuren und Säurederivaten, in deren Gegenwart die Oxidation der Verbindungen der allgemeinen Formel II erfolgt, handelt es sich um Säuren oder Säurederivate mit 1 bis 20 Kohlenstoffatomen.

Beispiele für verwendete Säuren und Säurederivate sind Ameisensäure, Eisessig, Propionsäure, n-Buttersäure, i-Buttersäure, die isomeren Valeriansäuren sowie deren Anhydride. Vorzugsweise werden Eisessig oder Propionsäureanhyrid verwendet.

Bevorzugte Verbindungen der allgemeinen Formel II sind solche, in denen R¹ gleich oder verschieden ist und für Wasserstoff, für einen Methyl-, Isopropyl-, Isobutyl-, t-Butyl-, Phenyl- oder Naphthylrest oder einen anellierten Benzolring steht und n gleich 0 oder 1 ist.

In einer speziellen Ausführung erfolgt die Oxidation von 1,1'-Bis(diphenylphosphino)cobaltocen in einer Lösung einer von dem Anion X abgeleiteten Säure (H)ₘX, wobei m die zuvor genannte Bedeutung besitzt, gegebenenfalls in Gegenwart eines organischen Lösungsmittels. Als Lösungsmittel hat sich Toluol, Xylol, Benzol, Cyclohexan, n-Hexan, n-Heptan, n-Octan und insbesondere Toluol bewährt. Beispiele für die Säure (H)ₘX sind Salpetersäure, Trifluormethansulfonsäure oder Trifluoressigsäure. Dabei wird dieses Verfahren zur Herstellung der erfindungsgemäßen Verbindungen bei einer Temperatur von -5°C bis 40°C, vorzugsweise von 0°C bis 25°C durchgeführt.

Bei dieser speziellen Ausführung kann auf den weiteren Zusatz einer organischen Säure oder eines Säurederivates verzichtet werden, da das aus der Säure (H)ₘX gebildete Anion X zugegen ist und das phosphansubstituierte Cobalticinium-Kation absättigt.

Zur Herstellung von 1,1'-Bis(diphenylphosphinoindenyl)-cobalt wird Inden in Ether gelöst und mit n-Butyllithium versetzt. Nach tropfenweiser Zugabe von Chlordiphenylphosphan filtriert man die gelbe Lösung über Watte von ausgefallenem Lithiumchlorid ab. Das Filtrat wird mit Kalium versetzt und solange gerührt, bis das Kalium vollständig abreagiert hat. Der dabei angefallene gelblich-grüne Feststoff wird getrocknet und in Tetrahydrofuran gelöst. Nach Zugabe von wasserfreiem Cobaltchlorid erhitzt man unter Rückfluß über 18 Stunden. Zum Aufarbeiten des Ansatzes wird das Tetrahydrofuran am Rotationsverdampfer entfernt, der Rückstand in Toluol aufgenommen, filtriert, eingeengt, mit Hexan versetzt und auf -80°C abgekühlt. Nach Filtrieren der abgekühlten Lösung und Einengen des Filtrates am Rotationsverdampfer erhält man 1,1'-Bis(diphenylphosphinoindenyl)cobalt als rot-orangenes Öl, das zur Herstellung der Verbindungen der allgemeinen Formel I eingesetzt werden kann.

Die Verbindungen der allgemeinen Formel I fallen als gelbe Feststoffe, z.B. im Falle von X gleich Tetrafluoroborat oder Hexafluoroantimonat, oder als gelbe Öle, z.B. im Falle von X gleich Nitrat, Trifluoracetat oder Triflat, an. Durch Lösen der Öle in Methylenchlorid und erneutes langsames Eintropfen in Ether lassen sich gelbe Feststoffe erhalten.

Die Verbindungen der allgemeinen Formel I weisen eine gute Löslichkeit in polaren organischen Lösungsmitteln wie z.B. Methylenchlorid, Nitromethan, Methanol und Aceton auf.

Überraschenderweise zeigt das 1,1'-Bis(dimethylphosphino)cobalticinium Nitrat im Gegensatz zu den übrigen Verbindungen der allgemeinen Formel I und dem aus Inorganic Chemistry, Vol. 17, No. 10, 1978 bekannten 1,1'-Bis(di-phenylphosphino) cobalticinium Hexafluorophosphat neben der Löslichkeit in polaren organischen Lösungsmitteln auch eine gute Löslichkeit in Wasser.

Die Erfindung betrifft daher phosphansubstituierte Cobalticiniumnitrate der allgemeinen Formel 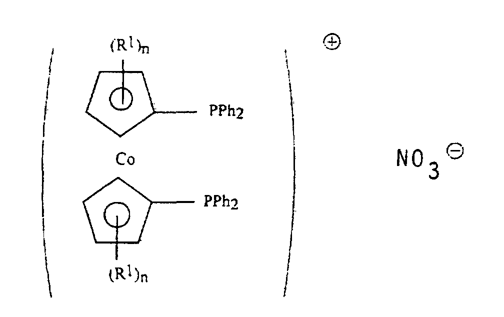 wobei R¹ und n die zuvor genannte Bedeutung besitzen.

Ein weiterer Gegenstand der Erfindung ist die Herstellung von Zweikernkomplexen aus den Verbindungen der allgemeinen Formel I, vorzugsweise aus dem 1,1'-Bis(diphenylphosphino)-cobalticinium Tetrafluoroborat sowie aus dem bekannten 1,1'-Bis(diphenylphosphino)cobalticinium Hexafluorophos-phat. So führt z.B. die Umsetzung von 1,5-Cyclooctadien-rhodiumchlorid-Dimer mit Silbertetrafluoroborat oder Silberhexafluorophosphat und mit 1,1'-Bis(diphenylphos-phino)cobalticinium Tetrafluoroborat oder mit 1,1'-Bis(diphenylphosphino)cobalticinium hexafluorophosphat in Aceton zu 1,1'-Bis(diphenylphosphino)cobalticinium-1,5-cyclooctadienrhodium-bistetrafluoroborat oder 1,1'-Bis(diphenylphosphino)cobalticinium-1,5-cyclooctadienrhodium-bis-hexafluorophosphat. Die Verbindung 1,5-Cyclooctadien wird im Stand der Technik mit COD abgekürzt. Beide Zweikernkomplexe sind gelbe Feststoffe, die aus einem Methylenchlorid : Ethergemisch von 1 : 6 - 1 : 10 Volumenteilen umkristallisiert werden können.

Als weiterer Zweikernkomplex ist 1,1'-Bis(diphenylphosphino)cobalticinium-allylpalladium-bistetrafluoroborat durch Umsetzung von Allylpalladiumchlorid mit Silbertetrafluoroborat und 1,1'-Bis(diphenylphosphino)-cobalticinium Tetrafluoroborat in Methylenchlorid als hellgrüner Feststoff erhältlich.

Die Verbindungen der Formel I eignen sich als Liganden für Metall-Komplexe, die als Katalysatoren in chemischen Prozessen, wie z.B. Hydroformylierungen von Olefinen oder olefinisch ungesättigten Verbindungen, verwendet werden können. Ein Verfahren zur Herstellung von Aldehyden unter Verwendung dieser Verbindungen ist Gegenstand einer am gleichen Tag eingereichten Patentanmeldung.

### Beispiele

Zur Aufnahme der ¹H, ¹³C{¹H} und ³¹P{¹H}-NMR-Spektren an den gemäß den folgenden Beispielen hergestellten Verbindungen diente ein Bruker NP-80 PFT, ein Varian VXR300 bzw. ein Varian Unity 500 Spektrometer. Die Infrarot-Spektren wurden mittels eines Perkin Elmer-Infrarot-Spektrophotometers Modell 842 aufgenommen. Feste Proben wurden mit Kaliumbromid verrieben und bei 10,0 - 12,5 MPa zu einem Preßling geformt.

### Beispiel 1a (Vergleichsbeispiel)

Herstellung von 1,1'-Bis(diphenylphosphino)cobalticinium Hexafluorophosphat.

Eine Lösung von 1,26 g (2,3 mmol) 1,1'-Bis(diphenylphosphino)cobaltocen in 15 ml Eisessig wurde bei 20°C über 18 Stunden an der Luft gerührt. Zu der orange-roten Lösung wurde eine Lösung von 0,5 g (3 mmol) Ammoniumhexafluorophosphat in 3 ml Wasser tropfenweise hinzugegeben, wobei sich ein gelber Niederschlag bildete. Nach Zugabe von 40 ml Ethanol ließ man noch 1 Stunde bei 20°C rühren. Der Feststoff wurde abfiltriert, mit 30 ml Ethanol gewaschen, in 5 ml Methylenchlorid gelöst und die Lösung langsam in 30 ml Ether getropft. Nach Absetzen des gelben Feststoffes wurde die überstehende Lösung abdekantiert und der zurückgebliebene gelbe Feststoff bei einem Druck von 1 Pa bei 20°C getrocknet.

Ausbeute: 1.2 g (1.7 mmol, 74 %)

Elementaranalyse:

| | | | | |
|---|---|---|---|---|
| gefunden | C: 57,57 | H: 3,53 | P: 13,0 | F: 16,6 |
| berechnet | C: 58,17 | H: 4,02 | P: 13,24 | F: 16,24 |

¹H-NMR (250 MHz, CD₃NO₂) δ = 7.47 (m, 20H, Ph) ; 5.83, 5.51 (m, 8H, Cp) ppm.
¹³C-{¹H}NMR (75 MHz, CD₃NO₂) : δ = 136.35 (d, Ph-ortho, 20.7 Hz); 133.0, 131.88 (Ph-meta/para); 91.0, 90.45 (Cp-C₂₋₅) ppm.
³¹P-{¹H} NMR (200 MHz, CD₃NO₂): δ = -22.24 (br s, PR₂R'); -145.13 (sept, 707.6 Hz, PF₆) ppm.
IR (KBr): v = 3111, 1474, 1431, 1381 (w), 831 (vs), 750, 697, 558 (m), 440 (w) cm⁻¹.

Im Gegensatz zu den aus dem Stand der Technik bekannten Verfahren zur Herstellung von 1,1'-Bis(diphenylphosphino)cobalticinium Hexafluorophosphat kann auf das aktive Einleiten von Sauerstoff oder sauerstoffhaltigen Gasen verzichtet werden. Die Umsetzung in Eisessig ohne aktives Einleiten von Sauerstoff führt zu 1,1'-Bis(diphenylphosphino)cobalticihium Hexafluorophosphat in hoher Reinheit und in hohen Ausbeuten.

### Beispiel 1

### Herstellung von 1,1'-Bis(diphenylphosphino)cobalticinium Tetrafluoroborat.

Zu einer Lösung von 1,24 g (2,3 mmol) 1,1'-Bis(diphenylphosphino)cobaltocen in 15 ml Propionsäureanhydrid wurden unter Kühlung auf 0°C 1,1 ml einer 50 Gew.-% wäßrigen Lösung (9 mmol) von Tetrafluoroborsäure gegeben. Man ließ die Lösung 2 Stunden bei einer Temperatur von 20°C an der Luft rühren, wobei sich die Lösung von braun nach rotorange verfärbte. Beim Eintropfen dieser Lösung in 50 ml Ether bildete sich ein gelber Niederschlag, der mit 20 ml Ether gewaschen und bei einem Druck von 1 Pa bei 20°C getrocknet wurde.

Ausbeute: 1.27 g (1.97 mmol, 86 %)
¹H-NMR (250 MHz, CD₃NO₂): δ = 7.46 (m, 20H, Ph); 5.83, 5.51 (m, 8H, C₅H₄P) ppm.
¹³C-{¹H}NMR (75 MHz, CD₃NO₂) : δ = 135.15 (d, J_{PC} = 19.7 Hz, Ph-ortho); 131.8 (s, Ph-para); 130.64 (s, Ph-meta); 89.9 (s, C₃ von C₅H₄P); 89.22 (s, C₂ von C₅H₄P) ppm.
³¹P-{¹H}NMR (200 MHz, CD₃NO₂): δ = -22.70 (s, PR₂R') ppm.
IR(KBr): ν = 1475 (m), 1431 (s), 1382 (m), 1082, 1062, 1025 (vs), 742, 697 (vs), 562, 477 (m) cm⁻¹.

### Beispiel 2

### Herstellung von 1,1'-Bis(diphenylphosphino)cobalticinium Hexafluoroantimonat.

0,3 g (0,54 mmol) 1,1'-Bis(diphenylphosphino)cobaltocen wurden in 5 ml Eisessig gelöst und über 18 Stunden bei einer Temperatur von 20°C an der Luft gerührt. Anschließend wurde die orange-rote Lösung tropfenweise mit einer Lösung von 0,2 g (0,77 mmol) Natriumhexafluoroantimonat in 5 ml Wasser versetzt, wobei sich sofort ein gelber Niederschlag bildete. Nach Zugabe von 30 ml Ethanol ließ man noch eine Stunde bei 20°C rühren. Anschließend wurde der gelbe Feststoff abfiltriert und mit 10 ml Ethanol gewaschen und anschließend bei einem Druck von 1 Pa bei 20°C getrocknet.

Ausbeute: 0.22 g (0.28 mmol, 51 %)

Elementaranalyse:

| | | | | |
|---|---|---|---|---|
| gefunden | C: 50,57 | H: 3,12 | P: 7,47 | F: 14,0 |
| berechnet | C: 51,52 | H: 3,56 | P: 7,81 | F: 14,38 |

¹H-NMR (250 MHz, CD₃NO₂) : δ = 7.54 (m, 20H, Ph); 5.83,
5.51 (m, 8H, C₅H₄P) ppm.
¹³C-{¹H}NMR (75 MHz, CD₃NO₂) : δ = 136.17 (d, J_{PC} = 9.4 Hz, Ph-ipso); 135.18 (d, J_{PC} = 21.4 Hz, Ph-ortho); 131.83 (s, Ph-para); 130.69 (d, J_{PC} = 7.5 Hz, Ph-meta); 90.54 (s, C₁ von C₅H₄P) ; 89.85 (d, J_{PC} = 9.4 Hz, C₃ von C₅H₄P) ; 89.20 (s,. C₂ von C₅H₄P) ppm.
IR (Kbr): ν = 3111, 1475 (w), 1431 (m), 1380, 863 (w), 751, 697 (s), 655 (vs), 632 (s), 562, 506, 473, 440 (w) cm⁻¹.

### Beispiel 3

### Herstellung von 1,1'-Bis (diphenylphosphino)cobalticinium Nitrat

### Variante A:

0,35 g (0,63 mmol) 1,1'-Bis(diphenylphosphino)cobaltocen wurden in 1,2 ml konzentrierte Salpetersäure gelöst und eine Stunde bei einer Temperatur von 20°C an der Luft gerührt. Beim Eintropfen der rötlich-braunen Lösung in 30 ml Ether schied sich ein Öl ab. Das abgeschiedene Öl wurde in 5 ml Methylenchlorid aufgenommen und die Lösung erneut in 30 ml Ether getropft. Das sich erneut abgeschiedene Öl wurde bei einem Druck von 1 Pa bei 20°C getrocknet.

Ausbeute: 0.32 g (0.52 mmol, 82 %) schmutzig-gelber Feststoff.

### Variante B:

0,2 g (0,36 mmol) 1,1'-Bis(diphenylphosphino)cobaltocen wurden in 3 ml Propionsäureanhydrid suspendiert und unter Kühlung auf 0°C mit 0,5 ml konzentrierte Salpetersäure versetzt. Beim Eintropfen der gelb-orangen Lösung in 30 ml Ether wurde ein Öl erhalten, das mit 10 ml Ether gewaschen wurde, in 5 ml Methylenchlorid aufgenommen und erneut sehr langsam in 30 ml Ether eingetropft wurde. Es bildete sich zunächst eine hellgelbe Trübung und dann ein flockiger Niederschlag. Der Niederschlag wurde abfiltriert, mit 10 ml Ether gewaschen und bei einem Druck von 1 Pa bei 20°C getrocknet.

Ausbeute: 0.13 g (0.21 mmol, 58 %)
¹H-NMR (300 MHz, CD₃NO₂): δ = 7.8 - 7.35 (m, 20H, Ph); 5.85, 5.52 (m, 8H, Cp) ppm.
¹³C-{¹H}NMR (75 MHz, CD₃NO₂) : δ = 136.10 (s, Ph-ipso); 135.07 (d, J_{PC} = 20.7 Hz, Ph-ortho) ; 131.70 (s, Ph-para); 130.58 (s, Ph-meta); 90.56 (s, C₁ von C₅H₄P); 89.34 (s, C₃ von C₅H₄P); 89.24 (s, C₂ von C₅H₄P) ppm.
IR(KBR): ν = 1475 (w), 1431 (s), 1381 (vs), 1193, 1116, 747, 726 (m), 700, 562 (s) cm⁻¹.

### Beispiel 4

### Herstellung von 1,1'-Bis(diphenylphosphino)cobalticinium Tosylat

0,87 g (1,56 mmol) 1,1'-Bis(diphenylphosphino)cobaltocen wurden in 5 ml Eisessig gelöst und bei einer Temperatur von 20°C über 18 Stunden an der Luft gerührt. Anschließend wurde die orange-rote Lösung mit einer Lösung von 1 g p-Toluolsulfonsäure-Monohydrat (4,8 mmol) in 5 ml Wasser versetzt und in 200 ml Ether eingetropft, wobei sich ein hellgelber feiner Niederschlag bildete. Der Niederschlag wurde aus 40 ml einer Mischung aus Methylenchlorid : Ether 1 : 6 Volumenteilen umkristallisiert und bei einem Druck von 1 Pa bei 20°C getrocknet.

Ausbeute: 0.76 g (1.04 mmol, 67 %)
¹H-NMR (250 MHz, CD₃NO₂) : δ = 7.8 - 7.2 (m, 24H, P-Ph, Tos-Ph), davon 7.63, 7.24 (d, J = 8 Hz, Tos-Ph); 5.9 - 5.5 (m, 8H, C₅H₄P); 2.37 (s, 3H, Tos-CH3) ppm.
¹³C-{¹H}NMR (75 MHz, CD₃NO₂): δ = 143.38 (SO₃-C-ipso); 135.28; 134.93 (PPh-C-ipso, CH₃-C-ipso); 132.77 (d); 131.82 (d); 130.82, 130.63, 130.43, 127.59 (SO₃-C-ortho) 90.62 (C₁ von C₅H₄P); 89.84 (C₂ von C₅H₄P); 89.24 (d, JPC = 7 Hz, C₃ von C₅H₄P); 21.52 (s, Tos-CH₃)ppm.
IR(KBr): ν = 1475 (w); 1417 (s); 1381 (w); 1237, 1172, 1118, 1027, 1007 (s); 869 (m); 814, 743 (s); 695, 678, 564 (vs) cm-1.

### Beispiel 5

### Herstellung von 1,1'-Bis(diphenylphosphino)cobalticinium Triflat

0,16 g (0,83 mmol) 1,1'-Bis(diphenylphosphino)cobaltocen wurden bei einer Temperatur von 20°C mit 3 ml (25,5 mmol) Trifluormethansulfonsäure versetzt und zwei Stunden bei 20°C unter Stickstoff gerührt, wobei sich die Lösung rotbraun färbte. Danach wurde noch eine Stunde bei 20°C an der Luft gerührt. Anschließend wurde die Lösung in 30 ml Ether getropft, wobei sich ein gelber Niederschlag abschied. Der gelbe Niederschlag wurde abgetrennt und nahm beim Trocknen bei einem Druck von 1 Pa bei 20°C eine ölige Konsistenz an. Das Öl wurde in 5 ml Methylenchlorid aufgenommen und anschließend wurde die Lösung in 30 ml Ether getropft, wobei sich ein hellgelber Feststoff abschied, der abermals bei einem Druck von 1 Pa und bei 20°C getrocknet wurde.

### Ausbeute: 0.16 g hellgelbes Pulver (27.3 %)

Elementaranalyse:

| | | |
|---|---|---|
| gefunden | C: 58,64 | H: 4,11 |
| berechnet | C: 59,5 | H: 4,0 |

¹H-NMR (250 MHz, CD₃NO₂) : δ = 7.47 (m, 20H, Ph); 5.86, 5.52 (m, 8H, C₅H₄P) ppm.
¹³C-{¹H}NMR (75 MHz, CD₃NO₂) : δ = 135.24 (Ph-ortho); 131.85 (Ph-para); 130.67 (Ph-meta); 89.97 (C₃ von C₅H₄P); 89.31 (C₂ von C₅H₄P) ppm.
IR(KBr): ν = 1435 (w); 1257 (vs); 1177 (s); 1031 (vs); 768, 746, 725, 690 (w); 643 (vs) cm-1.

### Beispiel 6

### Herstellung von 1,1'-Bis(diphenylphosphino)cobalticinium Trifluoracetat

0,19 g (0,34 mmol) 1,1'-Bis(diphenylphosphino)cobaltocen wurden mit 2 ml Trifluoressigsäure versetzt und über 3 Stunden bei 20°C gerührt. Das erhaltene rote Öl wurde bei einem Druck von 1 Pa getrocknet und anschließend in 30 ml Ether getropft, wobei sich ebenfalls ein rotes Öl abschied. Weitere Umfällversuche mit Gemischen aus Ether und Hexan oder Nitromethan und Ether oder Methylenchlorid und Ether führten ebenfalls zu einem rot-orangen bis braunen Öl.

Ausbeute: 0,14 g hellgrüner Feststoff (32 %).
¹H-NMR (300 MHz, CD₃NO₂: δ = 7.57 - 7.35 (m, 20H, Ph); 5.8, 5.45 (m, 8H, Cp) ppm.
¹³C-{¹H}NMR (75 MHz, CD₃NO₂): δ = 137.48 (Ph-ipso); 136.65 (Ph-ortho); 133.10 (Ph-para); 131.90 (Ph-meta); 91.34 (C₃ von C₅H₄P); 90.47 (C₂ von C₅H₄P) ppm.

### Beispiel 7

### Herstellung von 1,1'-Bis(diphenylphosphino)cobalticinium Tetraphenylborat

0,29 g (0,5 mmol) 1,1'-Bis(diphenylphosphino)cobaltocen wurden in 5 ml Eisessig gelöst und an der Luft 3 Stunden bei 20°C gerührt, wobei die Mischung sich orange-braun verfärbte. Anschließend wurde eine Lösung von 0,2 g Natriumtetraphenylborat (0,58 mmol) in 5 ml Wasser hinzugegeben. Der abgeschiedene Feststoff wurde mit 20 ml Wasser gewaschen und bei einem Druck von 1 Pa bei 20°C getrocknet.

Ausbeute: 0.3 g hellgelbes Pulver (0.34 mmol, 63 %), sehr hygroskopisch.
¹H-NMR (250 MHz, CD₃NO₂): δ = 7.5 - 6.8 (m, 40H, Ph), 5.8, 5.5 (m, 8H, Cp) ppm.
¹³C-{¹H}NMR (75 MHz, CD₃NO₂) : δ = 137.23; 135.1 (d, 22 Hz); 130.51, 127.01; 123.20, 89.70, 89.11 (Cp)ppm.

### Beispiel 8

### Herstellung von 1,1'-Bis(diphenylphosphinoindenyl)-cobalticinium-Tetrafluoroborat

2,46 g (3,3 mmol) 1,1'-Bis(diphenylphosphinoindenyl)-cobaltocen wurden bei einer Temperatur von 20°C in 5 ml Propionsäureanhydrid gelöst und mit 2 ml einer 50 Gew.-% wäßrigen Lösung (16 mmol) Tetrafluoroborsäure versetzt. Bei einer Temperatur von 20°C wurde eine Stunde an der Luft gerührt. Die erhaltene Lösung wurde in 30 ml Ether getropft. Anschließend wurde der abgeschiedene Feststoff in 5 ml Methylenchlorid aufgenommen und die Lösung erneut in 30 ml Ether getropft. Der erhaltene Feststoff wurde in gleicher Weise nochmals umgefällt. Nach dem Abdekantieren der überstehenden Lösung und nach dem Trocknen bei einem Druck von 1 Pa bei einer Temperatur von 20°C wurde ein orangenes Pulver erhalten.

Elementaranalyse:

| | | |
|---|---|---|
| gefunden | C: 65,15 | H: 4,76 |
| berechnet | C: 67,58 | H: 4,59 |

¹H-NMR (300 MHz, CD₃CN): δ = 8.0 - 7.5 (m, 20H, Ph); 7.4 - 6.9 (m, 8H, IndC_{4,5,6,7}); 3.8, 3.7 (m, 4H, Ind-Cp)ppm.
³¹P-{¹H}NMR (120 MHz, CD₃CN) : δ = 39.30 (m); 33.75 (br s) ppm.
IR(KBr): ν = 1708, 1456 (m), 1435 (s), 1380 (w), 1110, 1081, 1058 (vs), 995 (m), 749 (s), 727 (m), 691 (s), 564, 546, 524 (w) cm-1.

In Tabelle 1 sind die erfindungsgemäßen Verbindungen bezüglich ihrer Farbe/Konsistenz und bezüglich ihrer Löslichkeitseigenschaften zusammengestellt.

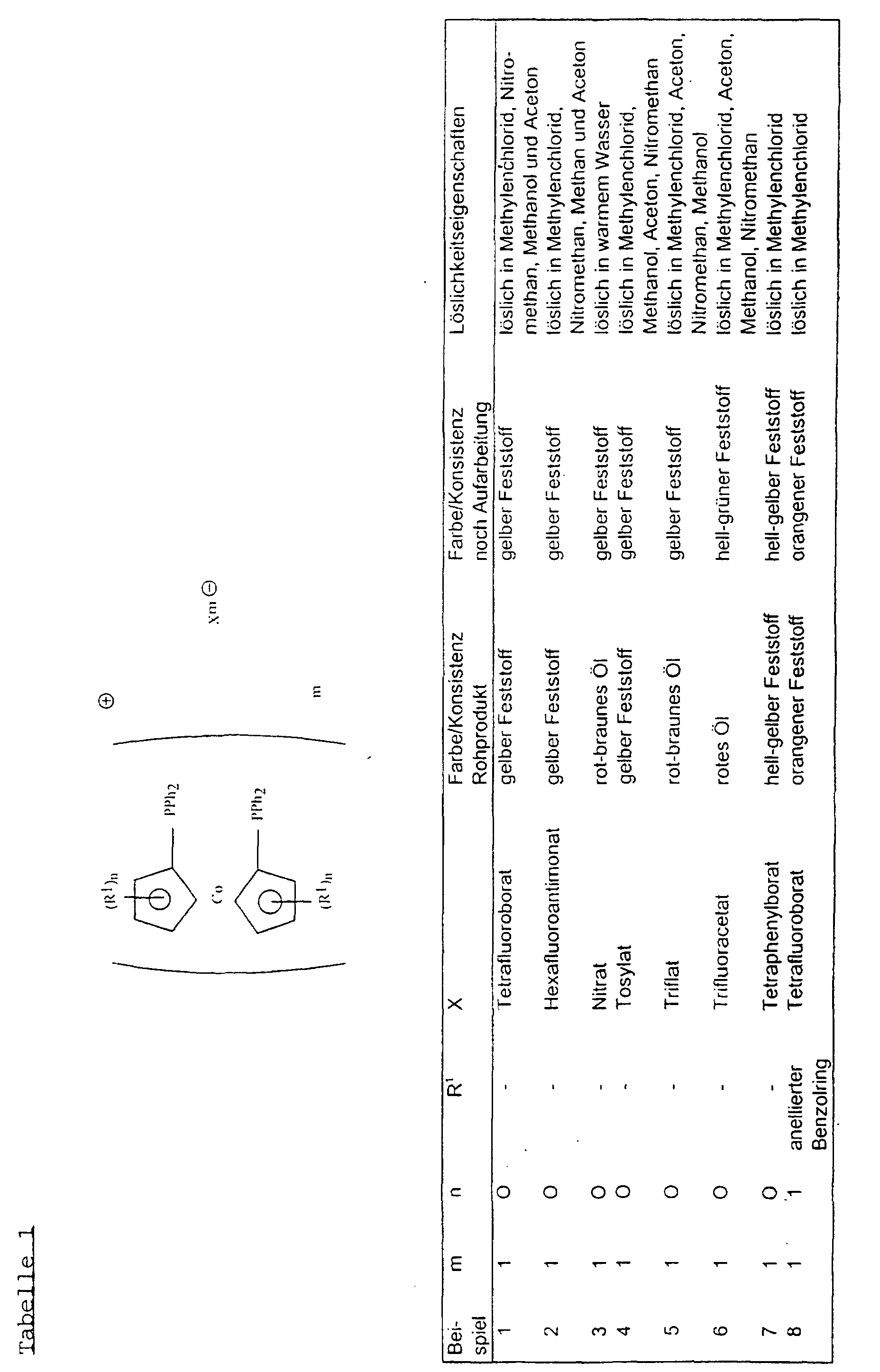

### Beispiel 9

### Herstellung von 1,1'-Bis(diphenylphosphino)cobalticinium-1,5-cyclooctadienrhodium-bis-hexafluorophosphat

0,34 g (0,69 mmol) 1,5-Cyclooctadienrhodiumchlorid-Dimer wurden in 10 ml Aceton gelöst und mit einer Lösung von 0,35 g (1,33 mmol) Silberhexafluorophosphat in 5 ml Aceton bei 20°C versetzt. Es wurde bei 20°C 1/2 Stunde lang gerührt und anschließend wurde das ausgefallene Silberchlorid abfiltriert. Das Filtrat wurde bei 20°C zu einer Lösung von 0,97 g (1,38 mmol) 1,1'-Bis(diphenylphosphino)cobalticinium-Hexafluorophosphat in 20 ml Aceton getropft. Anschließend wurde die Lösung auf 10 ml eingeengt, filtriert und die Lösung in 50 ml Hexan getropft. Dabei schied sich ein braunes Öl ab, das nach Abdekantieren der überstehenden Lösung mit 5 ml Methylenchlorid versetzt wurde. Dabei blieb ein gelbes Pulver zurück, das bei einem Druck von 1000 Pa bei 20°C getrocknet wurde. Das gelbe Pulver wurde in 10 ml Aceton aufgenommen, die Lösung filtriert und in 60 ml Ether eingetopft. Dabei schied sich ein gelber Feststoff ab, der bei einem Druck von 1 Pa und bei 20°C getrocknet wurde.

### Ausbeute: 0.73 g (0.69 mmol, 50 %)

Elementaranalyse:

| | | |
|---|---|---|
| gefunden | C: 45,57 | H: 3,84 |
| berechnet | C: 47,68 | H: 3,81 |

¹H-NMR (500 MHz, CD₃NO₂) : δ = 8.12, 7.83 - 7.73 (m, 20H, Ph); 5.92, 5.89 (m, 8H, Cp); 4.74 (m, 4H, COD olef.); 2.51, 2.36 (m, 8H, COD aliph.) ppm.
¹³C-{¹H}NMR (125 MHz, CD₃NO₂) : δ = 136.1 (m, Ph, 6.1/5.6 Hz); 134.5 (s, Ph); 131.32 (m, Ph, 5.0/5.4 Hz); 129.66 (m, Ph-C₁, 11.5/22.5/24.1/12.1 Hz); 105.33 (s, COD olef.); 98,56 (m, Cp-C₁); 91.19, 90.67 (s, Cp) ; 31.46 (s, COD aliph.) ppm.
³¹P-{¹H}NMR (200 MHz, CD₃NO₂) : δ = 20.75 (d, Rh-PR₂R', 151.2 Hz); -145.13 (sept., PF₆, 707.6 Hz) ppm.
IR(KBr) : ν = 1479, 1435, 1386, 1092 (w), 836 (vs), 747, 701, 559 (m) cm⁻¹.

### Beispiel 10

### Herstellung von 1,1'-Bis(diphenylphosphino)cobalticinium-1,5-cyclooctadienrhodium-bis-tetrafluoroborat

Eine Lösung von 0,25 g (0,51 mmol) 1,5-Cyclooctadienrhodiumchlorid-Dimer in 10 ml Aceton wurden mit einer Lösung von 0,19 g (1 mmol) Silbertetrafluoroborat in 5 ml Aceton bei 20°C versetzt. Man ließ 30 Minuten rühren. Anschließend wurde das ausgefallene Silberchlorid über Watte abfiltriert, wobei das Filtrat direkt in eine Lösung von 0,63 g (1 mmol) 1,1'-Bis(diphenylphosphino)-cobalticinium Tetrafluoroborat in 20 ml Aceton gegeben wurde. Man ließ noch 30 Minuten bei 20°C rühren, engte die Lösung auf etwa ein Zehntel des ursprünglichen Volumens ein und tropfte die eingeengte Lösung in 50 ml Hexan. Von dem sich abgeschiedenen braunen Öl wurde die überstehende Lösung abdekantiert und der Rückstand bei 1 Pa bei 20°C getrocknet. Anschließend wurde aus 30 ml eines Gemisches aus Methylenchlorid : Ether 1 : 6 Volumenteile umkristallisiert. Der erhaltene gelbe Feststoff wurde bei einem Druck von 1 Pa und bei 20°C getrocknet.

Ausbeute: 800 mg (0,8 mmol, 80 %)
¹H-NMR (500 MHz, CD₃NO₂): δ = 8.13, 7.83 - 7.73 (m, 20H, Ph); 5.92, 5.89 (m, 8H, Cp); 4.73 (m, 4H, COD olef.); 2.51, 2.36 (m, 8H, COD aliph.) ppm.
³¹P-{¹H}NMR (200 MHz, CD₃NO₂) : δ = 20.68 (d, Rh-PR₂R', 153.5 Hz) ppm.

## Patentansprüche

1. Verfahren zur Herstellung der Verbindungen der allgemeinen Formel I 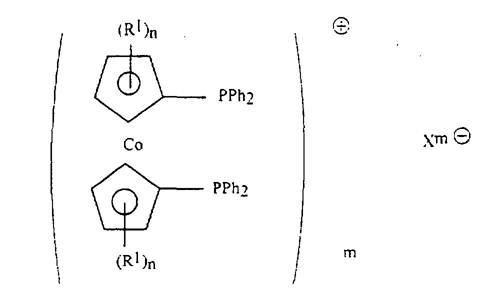 wobei
R₁ gleich oder verschieden ist und Wasserstoff, Alkyl- oder Alkoxyreste mit 1 bis 14 Kohlenstoffatomen, ferner Cycloalkyl-, Aryl- oder Aroxyreste mit 6 bis 14 Kohlenstoffatomen, einen anellierten Benzolring, einen Säureamidrest -C(O)-NR²R³, in dem R² und R³ gleich oder verschieden sind und für Wasserstoff, Alkylreste mit 1 bis 14 Kohlenstoffatomen, Cycloalkyl- oder Arylreste mit 6 bis 14 Kohlenstoffatomen stehen, die Carboxylgruppe oder einen Esterrest -C(O)-OR⁴, in dem R⁴ für einen Alkylrest mit 1 bis 14 Kohlenstoffatomen, ferner für einen Cycloalkyl- oder Arylrest mit 6 bis 14 Kohlenstoffatomen steht, bedeutet, n gleich oder verschieden ist und eine ganze Zahl von 0 bis 4 ist, m eine ganze Zahl von 1 bis 3 ist und X gleich Hexafluoroantimonat, Tetraphenylborat, Tosylat, Tetrafluoroborat, Triflat, Trifluoracetat, Triiodid, Tribromid, Nitrat, Perchlorat, Sulfat, Phosphat, Sulfonat ⁻O-S(O)₂-R⁵, wobei R⁵ einen Alkylrest mit 1 bis 14 Kohlenstoffatomen, Cycloalkyl- oder Arylrest mit 6 bis 14 Kohlenstoffatomen bedeutet, oder Carboxylat ⁻O-(CO)-R⁶, wobei R⁶ für Wasserstoff, einen Alkylrest mit 1 bis 14 Kohlenstoffatomen, ferner für einen Cycloalkyl- oder Arylrest mit 6 bis 14 Kohlenstoffatomen steht, ist, durch Oxidation von Verbindungen der allgemeinen Formel II 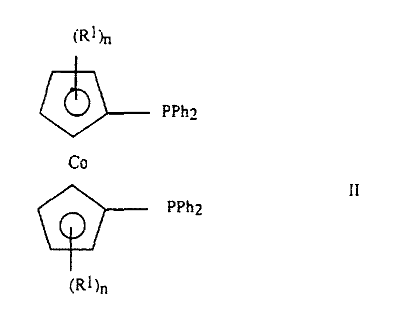 wobei R¹ und n die zuvor genannte Bedeutung besitzen, **dadurch gekennzeichnet, daß** die Oxidation bei einer Temperatur von -5°C bis 40°C, vorzugsweise von 10°C bis 30°C, in Gegenwart einer organischen Säure oder eines Säurederivates mit 1 bis 20 Kohlenstoffatomen erfolgt und danach die Umsetzung mit einer das Anion X enthaltenden Lösung durch Zugabe einer das Anion X enthaltenden Lösung bei einer Temperatur von 0°C bis 40°C, vorzugsweise von 15 bis 25°C erfolgt.

2. Verfahren nach Anspruch 1, **dadurch gekennzeichnet, daß** von den Verbindungen der allgemeinen Formel II solche oxidiert werden, bei denen R¹ für Wasserstoff, für einen Methyl-, Isopropyl-, Isobutyl-, t-Butyl-, Phenyl- oder Naphthylrest oder einen anellierten Benzolring steht.

3. Verfahren nach Anspruch 1 oder 2, **dadurch gekennzeichnet, daß** n gleich 0 oder 1 ist.

4. Verfahren zur Herstellung der Verbindungen der allgemeinen Formel I 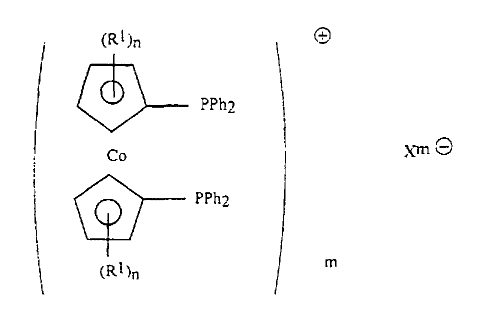 wobei
R₁ gleich oder verschieden ist und Wasserstoff, Alkyl- oder Alkoxyreste mit 1 bis 14 Kohlenstoffatomen, ferner Cycloalkyl-, Aryl- oder Aroxyreste mit 6 bis 14 Kohlenstoffatomen, einen anellierten Benzolring, einen Säureamidrest -C(O)-NR²R³, in dem R² und R³ gleich oder verschieden sind und für Wasserstoff, Alkylreste mit 1 bis 14 Kohlenstoffatomen, Cycloalkyl- oder Arylreste mit 6 bis 14 Kohlenstoffatomen stehen, die Carboxylgruppe oder einen Esterrest -C(O)-OR⁴, in dem R⁴ für einen Alkylrest mit 1 bis 14 Kohlenstoffatomen, ferner für einen Cycloalkyl- oder Arylrest mit 6 bis 14 Kohlenstoffatomen steht, bedeutet, n gleich oder verschieden ist und eine ganze Zahl von 0 bis 4 ist, m eine ganze Zahl von 1 bis 3 ist, und X gleich Hexafluoroantimonat, Tetraphenylborat, Tosylat, Tetrafluoroborat, Triflat, Trifluoracetat, Triiodid, Tribromid, Nitrat, Perchlorat, Sulfat, Phosphat, Sulfonat ⁻O-S(O)₂-R⁵, wobei R⁵ einen Alkylrest mit 1 bis 14 Kohlenstoffatomen, Cycloalkyl- oder Arylrest mit 6 bis 14 Kohlenstoffatomen bedeutet, oder Carboxylat ⁻O-(CO)-R⁶, wobei R⁶ für Wasserstoff, einen Alkylrest mit 1 bis 14 Kohlenstoffatomen, ferner für einen Cycloalkyl- oder Arylrest mit 6 bis 14 Kohlenstoffatomen steht, ist, durch Oxidation von Verbindungen der allgemeinen Formel II 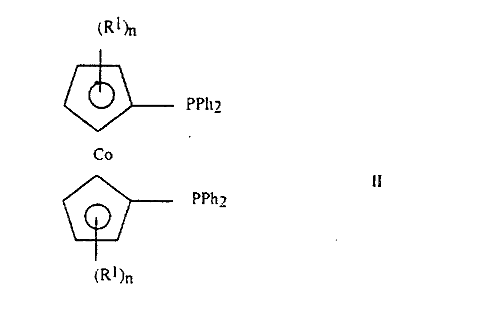 wobei R¹ und n die zuvor genannte Beeutung besitzen, **dadurch gekennzeichnet, daß** die Oxidation in Gegenwart einer organischen Säure oder eines Säurederivates mit 1 bis 20 Kohlenstoffatomen und in Gegenwart einer das Anion X enthaltenden Lösung bei einer Temperatur von -5°C bis 40°C, vorzugsweise 0 bis 25°C, erfolgt.

5. Verfahren nach Anspruch 1 oder 4, **dadurch gekennzeichnet, daß** Eisessig oder Propionsäureanhydrid verwendet wird.

6. Verfahren nach Anspruch 1 oder 4, **dadurch gekennzeichnet, daß** man für die Umsetzung mit einer das Anion X enthaltenden Lösung eine Lösung, vorzugsweise wäßrig, einer von dem Anion X abgeleiteten Säure (H)ₘX oder eines Alkali-, Erdalkalisalzes oder des Ammoniumsalzes dieser Säure (H)ₘX verwendet, wobei m die in Anspruch 1 definierte Bedeutung besitzt.

7. Verfahren nach Anspruch 4, **dadurch gekennzeichnet, daß** die Oxidation bei einer Temperatur von -5°C bis 40°C, vorzugsweise von 0 bis 25°C, in einer Lösung der von dem Anion X abgeleiteten Säure (H)ₘX, vorzugsweise Trifluormethansulfonsäure oder Trifluoressigsäure, durchgeführt wird.

8. Verfahren nach Anspruch 7, **dadurch gekennzeichnet, daß** die Oxidation in Gegenwart von Toluol, Xylol, Benzol, Cyclohexan, n-Hexan, n-Heptan, n-Octan, vorzugsweise Toluol, erfolgt.

9. Verfahren nach Anspruch 4, **dadurch gekennzeichnet, daß** die Oxidation in Gegenwart von konzentrierter Salpetersäure bei einer Temperatur von -5°C bis +10°C, vorzugsweise 0°C und in Gegenwart von Propionsäureanhydrid erfolgt.

10. Verwendung der Verbindungen hergestellt nach einem oder mehreren der Ansprüche 1 bis 9 zur Herstellung von Verbindungen der allgemeinen Formel III
[cdpp Rh COD]ₒYₚ III
wobei Y Hexafluorophosphat oder X, wie in Anspruch 1 definiert, o 1 oder 3 und p 1 oder 2 bedeutet.

11. Verwendung der Verbindungen hergestellt nach einem oder mehreren der Ansprüche 1 bis 9 zur Herstellung von Verbindungen der allgemeinen Formel IV
[cdpp Rh COD]ₒXₚ
wobei o gleich 1, p gleich 2 und X gleich Tetrafluoroborat oder Nitrat ist oder o gleich 1, p gleich 1 und X gleich Sulfat ist.

12. Verwendung der Verbindungen hergestellt nach einem oder mehreren der Ansprüche 1 bis 9 als Liganden für Metallkomplexe, die als Katalysatoren in chemischen Prozessen eingesetzt werden können.

13. Verbindungen der allgemeinen Formel V 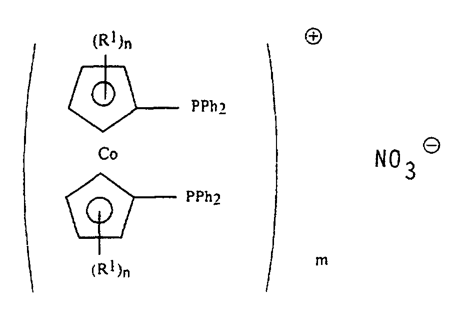 wobei
R₁ gleich oder verschieden ist und Wasserstoff, Alkyl- oder Alkoxyreste mit 1 bis 14 Kohlenstoffatomen, ferner Cycloalkyl-, Aryl- oder Aroxyreste mit 6 bis 14 Kohlenstoffatomen, einen anellierten Benzolring, einen Säureamidrest -C(O)-NR²R³, in dem R² und R³ gleich oder verschieden sind und für Was serstoff, Alkylreste mit 1 bis 14 Kohlenstoffatomen, Cycloalkyl- oder Arylreste mit 6 bis 14 Kohlenstoffatomen stehen, die Carboxylgruppe oder einen Esterrest -C(O)-OR⁴, in dem R⁴ für einen Alkylrest mit 1 bis 14 Kohlenstoffatomen, ferner für einen Cycloalkyl- oder Arylrest mit 6 bis 14 Kohlenstoffatomen steht, bedeutet, n gleich oder verschieden ist und eine ganze Zahl von 0 bis 4 ist.

14. Verbindungen nach Anspruch 13, **dadurch gekennzeichnet, daß** in der allgemeinen Formel V R¹ für Wasserstoff, für einen Methyl-, Isopropyl-, Isobutyl-, t-Butyl-, Phenyl- oder Naphthylrest oder einen anellierten Benzolring steht.

15. Verbindungen nach Anspruch 13 oder 14, **dadurch gekennzeichnet, daß** n gleich 0 oder 1 ist.

## Claims

1. A process for the preparation of the compounds of the formula I 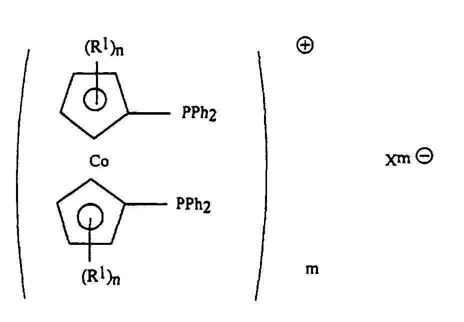 in which R¹ are identical or different and are hydrogen, alkyl or alkoxy radicals having 1 to 14 carbon atoms and furthermore cycloalkyl, aryl or aryloxy radicals having 6 to 14 carbon atoms, a fused benzene ring, an acid amide radical -C(O)-NR²R³, in which R² and R³ are identical or different and are hydrogen, alkyl radicals having 1 to 14 carbon atoms, or cycloalkyl or aryl radicals having 6 to 14 carbon atoms, the carboxyl group or an ester radical -C(O)-OR⁴, in which R⁴ is an alkyl radical having 1 to 14 carbon atoms, or a cycloalkyl or aryl radical having 6 to 14 carbon atoms, n are identical or different and are an integer from 0 to 4, m is an integer from 1 to 3 and X is hexafluoroantimonate, tetraphenylborate, tosylate, tetrafluoroborate, triflate, trifluoroacetate, triiodide, tribomide, nitrate, perchlorate, sulfate, phosphate, sulfonate ⁻O-S(O)₂-R⁵, in which R⁵ is an alkyl radical having 1 to 14 carbon atoms, or a cycloalkyl or aryl radical having 6 to 14 carbon atoms, or carboxylate ⁻O-C(O)-R⁶, in which R⁶ is hydrogen, an alkyl radical having 1 to 14 carbon atoms or a cycloalkyl or aryl radical having 6 to 14 carbon atoms by oxidation of compounds of the formula II 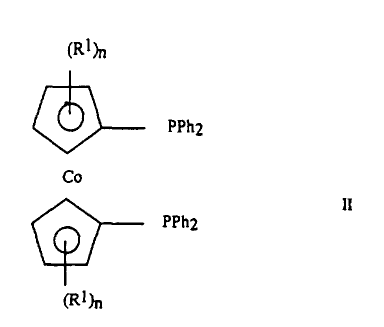 in which R¹ and n have the meaning as defined above, wherein the oxidation is carried out at a temperature of -5°C to 40°C, preferably of 10°C to 30°C, in the presence of an organic acid or of an acid derivative having 1 to 20 carbon atoms and the reaction with a solution containing the anion X is then carried out by adding a solution containing the anion X at a temperature of 0°C to 40°C, preferably of 15 to 25°C.

2. The process as claimed in claim 1, wherein those compounds of the formula II in which R¹ is hydrogen, a methyl, isopropyl, isobutyl, tert-butyl, phenyl or naphthyl radical or a fused benzene ring are oxidized.

3. The process as claimed in claim 1 or 2, wherein n is 0 or 1.

4. A process for the preparation of the compounds of the formula I 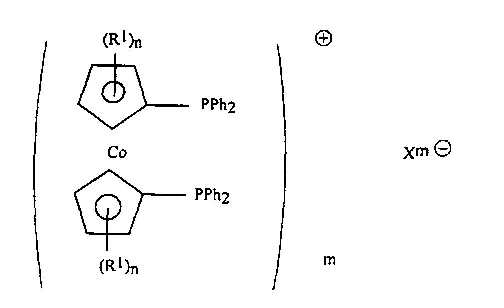 in which R¹ are identical or different and are hydrogen, alkyl or alkoxy radicals having 1 to 14 carbon atoms and furthermore cycloalkyl, aryl or aryloxy radicals having 6 to 14 carbon atoms, a fused benzene ring, an acid amide radical -C(O)-NR²R³, in which R² and R³ are identical or different and are hydrogen, alkyl radicals having 1 to 14 carbon atoms, or cycloalkyl or aryl radicals having 6 to 14 carbon atoms, the carboxyl group or an ester radical -C(O)-OR⁴, in which R⁴ is an alkyl radical having 1 to 14 carbon atoms, or a cycloalkyl or aryl radical having 6 to 14 carbon atoms, n are identical or different and are an integer from 0 to 4, m is an integer from 1 to 3 and X is hexafluoroantimonate, tetraphenylborate, tosylate, tetrafluoroborate, triflate, trifluoroacetate, triiodide, tribromide, nitrate, perchlorate, sulfate, phosphate, sulfonate ⁻O-S(O)₂-R⁵, in which R⁵ is an alkyl radical having 1 to 14 carbon atoms, or a cycloalkyl or aryl radical having 6 to 14 carbon atoms, or carboxylate ⁻O-(CO)-R⁶, in which R⁶ is hydrogen, an alkyl radical having 1 to 14 carbon atoms or a cycloalkyl or aryl radical having 6 to 14 carbon atoms, by oxidation of compounds of the formula II 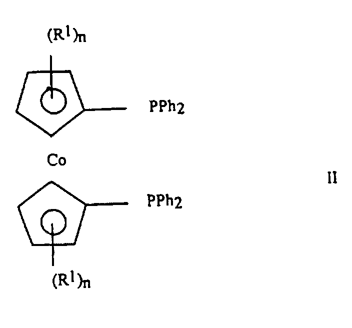 in which R¹ and n have the meaning as defined above, wherein the oxidation is carried out in the presence of an organic acid or of an acid derivative having 1 to 20 carbon atoms and in the presence of a solution containing the anion X at a temperature of -5°C to 40°C, preferably 0 to 25°C.

5. The process as claimed in claim 1 or 4, wherein glacial acetic acid or propionic anhydride is used.

6. The process as claimed in claim 1 or 4, wherein a solution, preferably aqueous, of an acid (H)ₘX derived from the anion X or of an alkali metal salt or alkaline earth metal salt or of the ammonium salt of this acid (H)ₘX, in which m has the meaning defined in claim 1, is used for the reaction with a solution containing the anion X.

7. The process as claimed in claim 4, wherein the oxidation is carried out at a temperature of -5°C to 40°C, preferably of 0 to 25°C in a solution of the acid (H)ₘX derived from the anion X, preferably trifluoromethanesulfonic acid or trifluoroacetic acid.

8. The process as claimed in claim 7, wherein the oxidation is carried out in the presence of toluene, Xylene, benzene, cyclohexane, n-hexane, n-heptane, n-octane, preferably toluene.

9. The process as claimed in claim 4, wherein the oxidation is carried out in the presence of concentrated nitric acid at a temperature of -5°C to +10°C, preferably 0°C, and in the presence of propionic anhydride.

10. The use of the compounds prepared as claimed in one or more of claims 1 to 9 for the preparation of compounds of the formula III
[cdpp Rh COD]ₒYₚ III
in which Y is hexafluorophosphate or X as defined in claim 1, o is 1 or 3 and p is 1 or 2.

11. The use of the compounds prepared as claimed in one or more of claims 1 to 9 for the preparation of compounds of the formula IV
[cdpp Rh COD]ₒXₚ
in which o is 1, p is 2 and X is tetrafluoroborate or nitrate or o is 1, p is 1 and X is sulfate.

12. The use of the compounds prepared as claimed in one or more of claims 1 to 9 as ligands for metal complexes which can be used as catalysts in chemical processes.

13. Compounds of the formula V 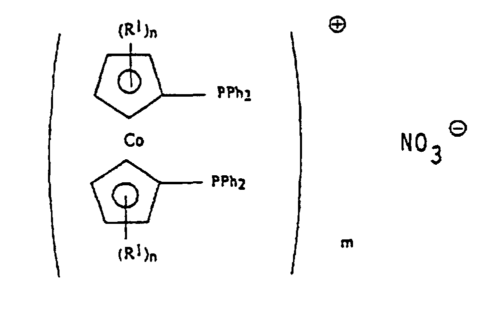 in which R¹ are identical or different and are hydrogen, alkyl or alkoxy radicals having 1 to 14 carbon atoms and furthermore cycloalkyl, aryl or aryloxy radicals having 6 to 14 carbon atoms, a fused benzene ring, an acid amide radical -C(O)-NR²R³, in which R² and R³ are identical or different and are hydrogen, alkyl radicals having 1 to 14 carbon atoms, or cycloalkyl or aryl radicals having 6 to 14 carbon atoms, the carboxyl group or an ester radical -C(O)-OR⁴, in which R⁴ is an alkyl radical having 1 to 14 carbon atoms, or a cycloalkyl or aryl radical having 6 to 14 carbon atoms, n are identical or different and are an integer from 0 to 4.

14. The compounds as claimed in claim 13, wherein, in the formula V, R¹ is hydrogen a methyl, isopropyl, isobutyl, tert-butyl, phenyl or naphthyl radical or a fused benzene ring.

15. The compounds as claimed in claim 13 and 14, wherein n is 0 or 1.

## Revendications

1. Procédé de préparation de composés de formule générale I 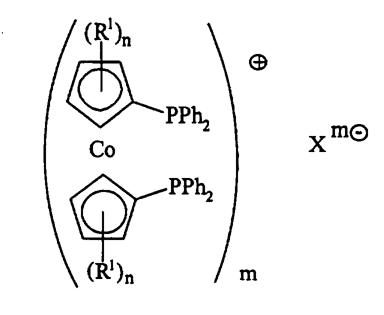 dans laquelle les R¹ sont identiques ou différents et représentent l'hydrogène, des restes alkyle ou alcoxy de 1 à 14 atomes de carbone, ou encore des restes cycloalkyle, aryle ou aryloxy de 6 à 14 atomes de carbone, un cycle benzène condensé, un reste amide -C(O)-NR²R³ dans lequel R² et R³ sont identiques ou différents et représentent l'hydrogène, des restes alkyle de 1 à 14 atomes de carbone ou des restes cycloalkyle ou aryle de 6 à 14 atomes de carbone, le groupe carboxyle ou un reste ester -C(O)-OR⁴ dans lequel R⁴ représente un reste alkyle de 1 à 14 atomes de carbone ou un reste cycloalkyle ou aryle de 6 à 14 atomes de carbone, les n sont identiques ou différents et représentent un nombre entier de 0 à 4, m est un nombre entier de 1 à 3 et X représente un hexafluoroantimonate, un tétraphénylborate, un tosylate, un tétrafluoroborate, un triflate, un trifluoroacétate, un triiodure, un tribromure, un nitrate, un perchlorate, un sulfate, un phosphate, un sulfonate ⁻O-S(O)₂-R⁵ où R⁵ représente un reste alkyle de 1 à 14 atomes de carbone ou un reste cycloalkyle ou aryle de 6 à 14 atomes de carbone, ou un carboxylate ⁻O-C(O)-R⁶ où R⁶ représente un atome d'hydrogène, un reste alkyle de 1 à 14 atomes de carbone ou un reste cycloalkyle ou aryle de 6 à 14 atomes de carbone,
par oxydation de composés de formule générale II 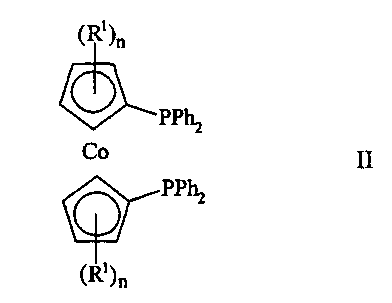 dans laquelle R¹ et n ont la signification indiquée précédemment, **caractérisé en ce que** l'on effectue l'oxydation à une température de -5°C à 40°C, de préférence de 10°C à 30°C, en présence d'un acide organique ou d'un dérivé d'acide de 1 à 20 atomes de carbone, puis on effectue une réaction avec une solution contenant l'anion X en ajoutant une solution contenant l'anion X à une température de 0°C à 40°C, de préférence de 15°C à 25°C.

2. Procédé selon la revendication 1, **caractérisé en ce que**, parmi les composés de formule générale II, on oxyde ceux dans lesquels R¹ représente un atome d'hydrogène, un reste méthyle, isopropyle, isobutyle, t-butyle, phényle ou naphtyle ou un cycle benzène condensé.

3. Procédé selon la revendication 1 ou 2, **caractérisé en ce que** n est égal à 0 ou 1.

4. Procédé de préparation des composés de formule générale I 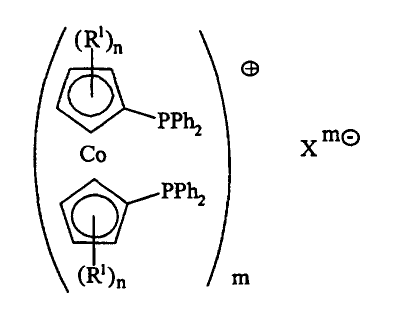 dans laquelle les R¹ sont identiques ou différents et représentent l'hydrogène, des restes alkyle ou alcoxy de 1 à 14 atomes de carbone, ou encore des restes cycloalkyle, aryle ou aryloxy de 6 à 14 atomes de carbone, un cycle benzène condensé, un reste amide -C(O)-NR²R³ dans lequel R² et R³ sont identiques ou différents et représentent l'hydrogène, des restes alkyle de 1 à 14 atomes de carbone ou des restes cycloalkyle ou aryle de 6 à 14 atomes de carbone, le groupe carboxyle ou un reste ester -C(O)-OR⁴ dans lequel R⁴ représente un reste alkyle de 1 à 14 atomes de carbone ou un reste cycloalkyle ou aryle de 6 à 14 atomes de carbone, les n sont identiques ou différents et représentent un nombre entier de 0 à 4, m est un nombre entier de 1 à 3 et X représente un hexafluoroantimonate, un tétraphénylborate, un tosylate, un tétrafluoroborate, un triflate, un trifluoroacétate, un triiodure, un tribromure, un nitrate, un perchlorate, un sulfate, un phosphate, un sulfonate ⁻O-S(O)₂-R⁵ où R⁵ représente un reste alkyle de 1 à 14 atomes de carbone ou un reste cycloalkyle ou aryle de 6 à 14 atomes de carbone, ou un carboxylate ⁻O-C(O)-R⁶ où R⁶ représente un atome d'hydrogène, un reste alkyle de 1 à 14 atomes de carbone ou un reste cycloalkyle ou aryle de 6 à 14 atomes de carbone,
par oxydation des composés de formule générale II 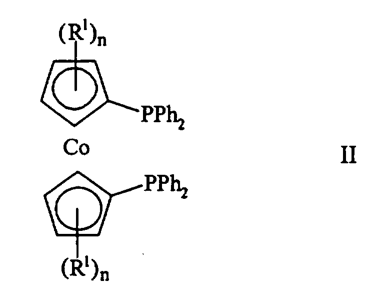 dans laquelle R¹ et n ont la signification indiquée précédemment, **caractérisé en ce que** l'oxydation s'effectue en présence d'un acide organique ou d'un dérivé d'acide de 1 à 20 atomes de carbone et en présence d'une solution contenant l'anion X à une température de -5°C à 40°C, de préférence de 0°C à 25°C.

5. Procédé selon la revendication 1 ou 4, **caractérisé en ce que** l'on utilise de l'acide acétique glacial ou de l'anhydride propionique.

6. Procédé selon la revendication 1 ou 4, **caractérisé en ce que** l'on utilise pour la réaction avec une solution contenant l'anion X une solution, de préférence aqueuse, d'un acide (H)ₘX dérivé de l'anion X, ou d'un sel de métal alcalin, de métal alcalino-terreux ou d'ammonium de cet acide (H)ₘX, m ayant la signification définie dans la revendication 1.

7. Procédé selon la revendication 4, **caractérisé en ce que** l'oxydation s'effectue à une température de -5°C à 40°C, de préférence de 0 à 25°C, dans une solution de l'acide (H)ₘX dérivé de l'anion X, de préférence de l'acide trifluorométhanesulfonique ou de l'acide trifluoroacétique.

8. Procédé selon la revendication 7, **caractérisé en ce que** l'oxydation s'effectue en présence de toluène, de xylène, de benzène, de cyclohexane, de n-hexane, de n-heptane, de n-octane, de préférence de toluène.

9. Procédé selon la revendication 4, **caractérisé en ce que** l'oxydation s'effectue en présence d'acide nitrique concentré à une température de -5°C à +10°C, de préférence de 0°C, et en présence d'anhydride propionique.

10. Utilisation des composés préparés selon une ou plusieurs des revendications 1 à 9 pour la préparation de composés de formule générale III
[cdpp Rh COD]ₒYₚ III
dans laquelle Y est l'hexafluorophosphate ou X tel que défini dans la revendication 1, o est égal à 1 ou 3 et p est égal à 1 ou 2.

11. Utilisation des composés préparés selon l'une ou plusieurs des revendications 1 à 9 pour la préparation de composés de formule générale IV
[cdpp Rh COD]ₒXₚ
dans laquelle o est égal à 1, p est égal à 2 et X est un tétrafluoroborate ou un nitrate, ou o est égal à 1, p est égal à 1 et X est un sulfate.

12. Utilisation des composés préparés selon l'une ou plusieurs des revendications 1 à 9 comme ligands pour des complexes métalliques pouvant être utilisés comme catalyseurs dans des procédés chimiques.

13. Composés de formule générale V 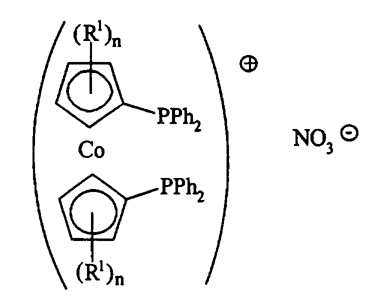 dans laquelle les R¹ sont identiques ou différents et représentent l'hydrogène, des restes alkyle ou alcoxy de 1 à 14 atomes de carbone, ou encore des restes cycloalkyle, aryle ou aryloxy de 6 à 14 atomes de carbone, un cycle benzène condensé, un reste amide -C(O)-NR²R³ dans lequel R² et R³ sont identiques ou différents et représentent l'hydrogène, des restes alkyle de 1 à 14 atomes de carbone ou des restes cycloalkyle ou aryle de 6 à 14 atomes de carbone, le groupe carboxyle ou un reste ester -C(O)-OR⁴ dans lequel R⁴ représente un reste alkyle de 1 à 14 atomes de carbone ou un reste cycloalkyle ou aryle de 6 à 14 atomes de carbone, les n sont identiques ou différents et représentent un nombre entier de 0 à 4.

14. Composés selon la revendication 13, **caractérisés en ce que**, dans la formule générale V, R¹ représente l'hydrogène, un reste méthyle, isopropyle, isobutyle, t-butyle, phényle ou naphtyle ou un cycle benzène condensé.

15. Composés selon la revendication 13 ou 14, **caractérisés en ce que** n est égal à 0 ou 1.
